# EUROPEAN PATENT APPLICATION

(11) **EP 3 285 385 A1**
(43) Date of publication of application: **21.02.2018**
(21) Application number: 17185067.0
(22) Date of filing: 07.08.2017
(51) Int. Cl.: H02M 5/293, H02M 7/06, H02M 7/162, H02M 7/72, H02M 5/297, H02M 1/12, H02M 1/14, H02M 7/797, B60L 11/00, H02J 7/00

(54) **ACTIVE RECTIFIER TOPOLOGY**

(30) Priority: 15.08.2016 US 201615236890
(71) Applicant: Hamilton Sundstrand Corporation, Charlotte, NC 28217-4578 (US)
(72) Inventor: ROZMAN, Gregory I., Rockford, IL 61114 (US); MOSS, Steven J., Rockford, IL 61114 (US)
(74) Representative: Bridge, Kerry Ann

(57) **Abstract**

An active rectifier module (10) includes a matrix converter (20) having a plurality of phase inputs and a plurality of phase outputs, a rectifier including a plurality of inputs, each connected to a corresponding phase output in the plurality of phase outputs, a filter capacitor connected across a DC output of the rectifier, and a DC output (42) configured to provide DC power to a load.

## Description

### TECHNICAL FIELD

The present disclosure relates generally to rectifier modules for vehicular power systems, and more specifically to an active rectifier module for electric and/or hybrid electric vehicles.

### BACKGROUND

Certain ground vehicles, such as those utilized in military and similar applications, use hybrid electric or pure electric based power systems. A typical electric power system architecture includes one or more un-regulated permanent magnet generators coupled to an active rectifier for providing DC power to a power distribution system. The active rectification places a ripple current on the power provided to the power distribution system. The ripple currents are, in turn, typically filtered out via the use of a low-impedance DC-link capacitor.

As dependence on the electric systems for power within the vehicle increase, integration of an active rectifier into the small, complex structured, high thermal and mechanical stress environment of a vehicle system becomes more difficult. Passive components of an active rectifier contribute substantially to the necessary size of the active rectifier. By way of example, the capacitors required to provide a low-impedance DC link, and provide minimal electromagnetic interference (EMI) are a major factor in the necessary size of such a rectifier system. Further, the size and utilization of the passive components can require an active cooling supply to maintain the power system temperatures below a temperature where the electronics are susceptible to damage.

### SUMMARY OF THE INVENTION

In one exemplary embodiment an active rectifier module includes a matrix converter having a plurality of phase inputs and a plurality of phase outputs, a rectifier including a plurality of inputs, each connected to a corresponding phase output in the plurality of phase outputs, a filter capacitor connected across a DC output of the rectifier, and a DC output configured to provide DC power to a load.

In another example of the above described active rectifier module the rectifier is a passive rectifier.

In another example of any of the above described active rectifier modules the rectifier is an active rectifier.

In another example of any of the above described active rectifier modules the active rectifier is a bi-directional active rectifier.

In another example of any of the above described active rectifier modules a current at the plurality of phase inputs has a first frequency, a current at the plurality of phase outputs has a second frequency, and the second frequency is greater than the first frequency.

Another example of any of the above described active rectifier modules further includes a DC bus filter connecting the DC output of the rectifier to the filter capacitor.

In another example of any of the above described active rectifier modules the matrix converter includes a first set of active switching elements and a second set of active switching elements.

In another example of any of the above described active rectifier modules the first set of active switching elements are arranged as a rectifier and the second set of active switching elements are arranged as an inverter.

In another example of any of the above described active rectifier modules the first set of active switching elements are switched on and off in synchronization with the source voltage and the second set of active switching elements are configured to be controlled by a pulse width modulated control signal.

Another example of any of the above described active rectifier modules further includes a controller controllably connected to each of the active switching elements and configured to output control signals.

In another example of any of the above described active rectifier modules the controller is controllably connected to the rectifier, and configured to output a pulse width modulated control signal to the rectifier.

In another example of any of the above described active rectifier modules further includes a power source connected to the DC output, and a controller controllably connected to the active rectifier module and configured to cause the rectifier to provide an engine start.

In one exemplary embodiment an active rectifier module for a vehicle includes a matrix converter having a plurality of phase inputs and a plurality of phase outputs, wherein an AC frequency of the plurality of phase inputs is a first value, an AC frequency at the plurality of phase outputs is a second value, and the second value is higher than the first value, a rectifier including a plurality of inputs, each connected to a corresponding phase output in the plurality of phase outputs, and a DC output configured to provide DC power to a load.

In another example of the above described active rectifier module for a vehicle the rectifier is a passive rectifier.

In another example of any of the above described active rectifier modules for a vehicle the rectifier is an active rectifier.

In another example of any of the above described active rectifier modules for a vehicle the active rectifier is a bi-directional active rectifier.

An exemplary method for reducing ripple currents in an active rectifier module includes receiving AC power at a first frequency, converting the AC power to a second frequency using a matrix converter, the second frequency being higher than the first frequency, and rectifying the converted AC power into DC power using a rectifier circuit.

In a further example of the above described exemplary method for reducing ripple currents in an active rectifier module converting the AC power to the second frequency using the matrix converter, includes converting the AC power to a DC power using a first set of active switching elements within the matrix converter and converting the resultant DC power to an AC power using a second set of active switching elements within the matrix converter.

Another example of any of the above described exemplary methods for reducing ripple currents in an active rectifier module further includes receiving DC power at an output of the rectifier circuit, converting the DC power into a constant frequency AC power using the rectifier circuit, converting the AC power into a variable voltage variable frequency power using the matrix converter, and providing the variable voltage variable frequency power to provide an engine start.

Another example of any of the above described exemplary methods for reducing ripple currents in an active rectifier module further includes controlling the matrix converter using a pulse width modulated control signal.

These and other features of the present invention can be best understood from the following specification and drawings, the following of which is a brief description.

### BRIEF DESCRIPTION OF THE DRAWINGS

Figure 1 schematically illustrates an exemplary active rectifier module for an electric or a hybrid electric vehicle.
Figure 2 schematically illustrates a more detailed example of an active rectifier module.
Figure 3 schematically illustrates an alternate detailed example of an active rectifier module.
Figure 4 schematically illustrates the example active rectifier module of Figure 3, configured to operate as an engine starter.

### DETAILED DESCRIPTION OF AN EMBODIMENT

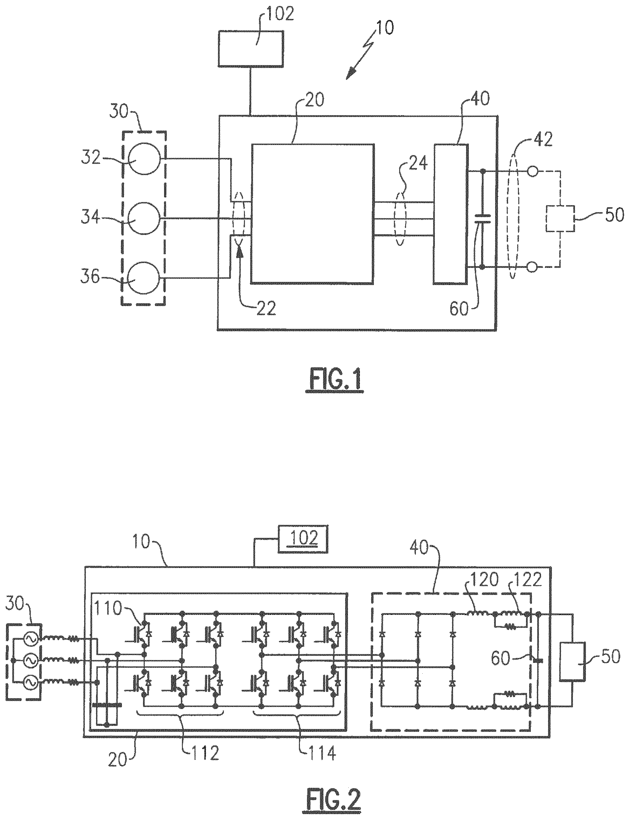

Figure 1 schematically illustrates an exemplary active rectifier module 10 for utilization within an electric vehicle or a hybrid electric vehicle. The active rectifier module 10 includes a matrix converter 20 with a polyphase input 22 and a polyphase output 24. While illustrated herein as three-phase inputs/outputs 22, 24, the matrix converter 20 can be configured to use any number of phases of a polyphase power system. In some examples, the matrix converter 20 can be implemented using bidirectional switches. In other example presented here, the matrix converter 20 can utilize unidirectional switches arranged in two conventional pulse width modulated converters without use of dc link capacitor. The matrix converter 20 is controlled via a controller 102 connected to the active rectifier module 10 via any known control mechanism.

Connected to the phase inputs 22 of the matrix converter 20 are multiple phases 32, 34, 36 of a three phase power generation system 30. In some examples, the three phase power generation system 30 can be a permanent magnet generator. In alternative systems, the three phase power generation system 30 can be any other generator type and the matrix converter 20 can provide similar functions. Similarly, the power generation system can, in other examples, have any number of phases 32, 34, 36 and is not limited to the three phase example.

Connected to the polyphase output 24, is a rectifier circuit 40. The rectifier circuit 40 can be any rectifier type and receives the polyphase output 24. The rectifier circuit 40 converts the polyphase output 24 into a DC output 42. The DC output 42 can be connected to a load 50, such as a power distribution bus, and provides DC power to the load 50. A DC link capacitor 60 is included across the DC output 42, and provides a filtering effect to the DC output, removing most, of the ripple currents introduced to the power transmission by the matrix converter 20 and the rectifier circuit 40.

During operation of the active rectifier module 10, the matrix converter 20 receives three phase AC power from the power generation system 30. The received power has a first current frequency, dependent on the power generation system 30. The matrix converter 20 converts the AC power to AC power with a second frequency, and outputs the power at the second frequency on the polyphase power outputs 24. The frequency of the current provided across the polyphase outputs 24 is substantially higher than the current frequency of the power provided by the power generation system 30. By way of example, in some embodiments, the current frequency at the polyphase outputs 24 is variable from 180Hz to 600Hz, while the frequency at the polyphase inputs 22 is constant and in the range of 1kHz - 2kHz or higher.

As can be appreciated by one of skill in the art, the majority of the physical size of an active rectifier module, such as the active rectifier module 10, is due to the DC link capacitor being required to be sized for the ripple currents introduced by the rectifier circuit 40. By substantially increasing the frequency of the power entering the rectifier circuit 40 using the matrix converter 20, relative to the power exiting the power generation system 30, the magnitude of the ripple currents, and thus the required physical size of the DC link capacitor 60, is substantially reduced and the temperature tolerances of the DC link capacitor can be increased.

Further, the size increase of the active rectifier module 10 due to the inclusion of the matrix converter 20 is less than the size decrease due to the smaller DC link capacitor 40, and the overall size of the active rectifier module 10 is decreased, relative to existing active rectification systems.

In some examples, such as the examples of Figures 2-4, the size of the DC link capacitor can be even further decreased through the utilization of inductance-capacitance (LC) filter optimization and tuning.

With continued reference to Figure 1, and with like numerals indicating like elements, Figure 2 schematically illustrates a more detailed example of the active rectifier module 10 of Figure 1. The controller 102 is connected to the active rectifier module 10 and controls operation of active components within the active rectifier module 10. By way of example, the controller 102 can be a dedicated controller, a general vehicle controller, or any other controller type.

Within the matrix converter 20 are multiple actively controlled power switches 110. The actively controlled power switches 110 are arranged in two cascade connected converters. The first converter 112 is a current source rectifier, while the second converter 114 is a voltage source inverter. The rectifier configuration 112 actively converts the received AC power from the power generation system 30 into a DC power. The inverter configuration 114 then converts the DC power from the first six pulse rectifier configuration 112 back into AC power. The inverter configuration 114 is operated at a substantially higher frequency than the rectifier configuration 112. In this way, the matrix converter 20 is configured to receive a power output from the power generation system 30, and convert the power output to a new AC power output at the substantially higher frequency.

Once the frequency of the AC power has been increased by the matrix converter 20, the power is provided to the rectifier circuit 40, as described above. In the example of Figure 2, the rectifier circuit 40 is a passive rectifier circuit utilizing six diodes arranged in a bridge configuration. One of skill in the art, having the benefit of this disclosure will appreciate that any other passive rectification topology could be utilized for passive rectification with minimal modifications to the illustrated system.

Also included within the rectifier circuit 40 are multiple filter inductors 120 and inductor resistor pairs 122. The inductor resistor pairs 122 function as damper circuits to ensure stable system operation in the presence of constant power load 50 (negative impedance load). The inductors 120 and the inductor resistor pairs 122 operate to tune the inductance of the passive filter and optimize the output to further reduce ripple currents and transients, according to known methodologies.

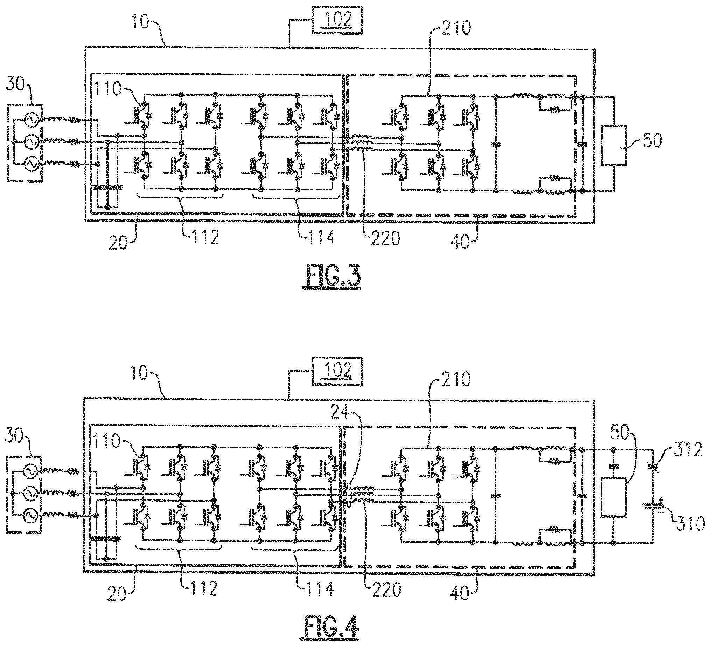

In alternative examples, active rectification can be utilized in place of the six pulse passive rectifier utilized as the rectifier circuit 40 in Figure 2. With continued reference to Figures 1 and 2, and with like numerals indicating like elements, Figure 3 schematically illustrates a modified example of the active rectifier module of Figure 1, with the utilization of an active rectifier instead of the passive six pulse rectifier of Figure 2.

As compared to the example of Figure 2, the matrix converter 20 of the example of Figure 3 is identical, including the arrangement of multiple active switching elements, such as controlled power switches 110, in two power converter configurations 112, 114, and the operations of the matrix converter 20 are functionally the same.

In place of the passive rectifier is an active rectifier 210. The active rectifier 210 is controlled by the controller 102, and arranged as a six pulse active rectifier. In alternative examples, the active rectifier 210 can be any similar active rectifier and function in a similar manner. Further aiding the utilization of the active rectifier 210 is the inclusion of boost inductors 220 connecting the output of the matrix converter 20 to the input of the active rectifier 210. The boost inductors 220, the PWM rectifier 240 and the dc link capacitor form active rectification circuit to convert AC power from the matrix converter into regulated DC power.

In the example of Figure 3, the active rectifier 210 is a bi-directional rectifier, and allows boosting the output voltage with a reduced output voltage filter size. In other examples, the matrix converter 110 may produce variable voltage constant frequency output, while the active rectifier circuit 40 operates at the optimal duty cycle. In other examples, both active rectifier circuit 40 and matrix converter 110 may coordinate controls to optimize system efficiency for different operating speed and load conditions.

In yet further examples, such as the example illustrated in Figure 4, a power source 310 can be connected in parallel with the load 50 via a switching element 312. By doing so, the active rectifier module 10 can provide for an electric engine start. In the example of Figure 4, the DC power from the power source 310 is received by the rectifier circuit 40 at the DC output of the rectifier circuit 40. The DC power is converted into a constant frequency AC power by the rectifier circuit 40, and provided to the matrix converter 20. The matrix converter 20 then converts the AC power into a variable voltage variable frequency (VVVF) power, which is provided to start the engine. The power of the variable voltage variable frequency is controlled by the operations of the matrix converter 20 or the rectifier circuit 40. In other examples, the active rectifier circuit 40 may provide VVVF power to the matrix converter, while the matrix converter 110 output follows input voltage and frequency from the active rectifier circuit 40. In other examples, both active rectifier circuit 40 and matrix converter 110 may coordinate controls to optimize system efficiency for different operating speeds.

While specific topologies are illustrated in the examples of Figures 2-4, one of skill in the art, having the benefit of this disclosure will appreciate that alternative topologies can be utilized to similar effect, and still fall within the above disclosure.

It is further understood that any of the above described concepts can be used alone or in combination with any or all of the other above described concepts. Although an embodiment of this invention has been disclosed, a worker of ordinary skill in this art would recognize that certain modifications would come within the scope of this invention. For that reason, the following claims should be studied to determine the true scope and content of this invention.

## Claims

1. An active rectifier module (10) comprising:
a matrix converter (20) having a plurality of phase inputs and a plurality of phase outputs;
a rectifier including a plurality of inputs, each connected to a corresponding phase output in the plurality of phase outputs;
a filter capacitor connected across a DC output of the rectifier; and
a DC output (42) configured to provide DC power to a load.

2. The active rectifier module of claim 1, wherein the rectifier is a passive rectifier.

3. The active rectifier module of claim 1, wherein the rectifier is an active rectifier, and preferably wherein the active rectifier is a bi-directional active rectifier.

4. The matrix converter of any preceding claim, wherein a current at the plurality of phase inputs has a first frequency, a current at the plurality of phase outputs has a second frequency, and the second frequency is greater than the first frequency, and/or further comprising a DC bus filter connecting the DC output of the rectifier to the filter capacitor.

5. The active rectifier module of any preceding claim, wherein the matrix converter (20) comprises a first set of active switching elements and a second set of active switching elements.

6. The active rectifier module of claim 5, wherein the first set of active switching elements are arranged as a rectifier and the second set of active switching elements are arranged as an inverter.

7. The active rectifier module of claim 5, wherein the first set of active switching elements are switched on and off in synchronization with the source voltage and the second set of active switching elements are configured to be controlled by a pulse width modulated control signal.

8. The active rectifier module of claim 7, further comprising a controller (102) controllably connected to each of said active switching elements and configured to output control signals, and preferably wherein said controller (102) is controllably connected to said rectifier, and configured to output a pulse width modulated control signal to said rectifier.

9. The active rectifier module of any preceding claim, further comprising a power source connected to said DC output, and a controller controllably connected to said active rectifier module and configured to cause said rectifier to provide an engine start.

10. An active rectifier module for a vehicle comprising:
a matrix converter (20) having a plurality of phase inputs and a plurality of phase outputs, wherein an AC frequency of the plurality of phase inputs is a first value, an AC frequency at the plurality of phase outputs is a second value, and the second value is higher than the first value;
a rectifier including a plurality of inputs, each connected to a corresponding phase output in the plurality of phase outputs; and
a DC output (42) configured to provide DC power to a load.

11. The active rectifier module of claim 10, wherein the rectifier is a passive rectifier.

12. The active rectifier module of claim 10, wherein the rectifier is an active rectifier, and preferably wherein the active rectifier is a bi-directional active rectifier.

13. A method for reducing ripple currents in an active rectifier module (10) comprising:
receiving AC power at a first frequency;
converting said AC power to a second frequency using a matrix converter (20), the second frequency being higher than the first frequency; and
rectifying said converted AC power into DC power using a rectifier circuit.

14. The method of claim 13, wherein converting said AC power to the second frequency using the matrix converter (20), comprises converting the AC power to a DC power using a first set of active switching elements within the matrix converter and converting the resultant DC power to an AC power using a second set of active switching elements within the matrix converter.

15. The method of claim 13 or 14, further comprising:
receiving DC power at an output of the rectifier circuit;
converting the DC power into a constant frequency AC power using the rectifier circuit;
converting the AC power into a variable voltage variable frequency power using the matrix converter; and
providing the variable voltage variable frequency power to provide an engine start, and/or further comprising controlling the matrix converter (20) using a pulse width modulated control signal.
